# NEUE EUROPÄISCHE PATENTSCHRIFT

(11) **EP 0 334 036 B2**
(45) Veröffentlichungstag und Bekanntmachung des Hinweises auf die Entscheidung über den Einspruch: **19.03.1997**
(45) Hinweis auf die Patenterteilung: 09.09.1992
(21) Anmeldenummer: 89103033.0
(22) Anmeldetag: 22.02.1989
(51) Int. Cl.: B26F 3/00

(54) **Flüssigstrahlschneidbrenner**
Liquid jet cutting torch
Torche de découpage à jet liquide

(30) Priorität: 19.03.1988 DE 3809292
(43) Veröffentlichungstag der Anmeldung: 27.09.1989
(73) Patentinhaber: MESSER GRIESHEIM GMBH, D-60547 Frankfurt (DE)
(72) Erfinder: Grohmann, Paul, Dipl.-Ing., A-2344 Maria-Enzerdorf (AT)

(56) Entgegenhaltungen:
- EP-A- 0 225 481
- BE-A- 528 923
- FR-A- 2 304 244
- US-A- 2 205 499
- US-A- 3 364 687

## Beschreibung

Die Erfindung betrifft einen Flüssigstrahlschneidbrenner mit einer mittig daran angeordneten Flüssigkeitsstrahlleitung für Hochdruck-Flüssigsauerstoff, an deren Mundstück eine Schneiddüse befestigt ist.

Beim Schneiden mit einem derartigen Flüssigkeitsstrahlbrenner wie er z. B. aus der DE-A-3543 657 bekannt ist, wird der vom Tank im Siedezustand befindende Sauerstoff durch eine Hochdruckpumpe bis auf 500 bar Druck gebracht. Der Austrittsdruck aus dem Schneidbrenner wird durch ein Überströmventil festgelegt.

Um die Wärme, welche durch Reibung entsteht, abzuführen, ist es erforderlich, den Sauerstoff mit einem Kühlmittel z.B. flüssigem Stickstoff zu kühlen. Hierzu ist es aus der o. g. Druckschrift lediglich bekannt, den Sauerstoff entsprechend in den Zuführungsleitungen zu kühlen.

Aufgabe der Erfindung ist es, einen Flüssigstrahlschneidbrenner zu schaffen, bei dem der Flüssigstrahl möglichst nahe bis an die Schneiddüse kühlbar ist.

Diese Aufgabe wird bei einem gattungsgemäßen Flüssigstrahlschneidbrenner durch die kennzeichnenden Merkmale des Anspruches 1 gelöst.

Vorteilhafte Weiterbildungen der Erfindung sind in den Unteransprüchen angegeben.

Durch die vorgesehene Doppelkühlung (tiefsiedendes, verflüssigtes Kühlmittel und Kühlwasser) mit dazwischenliegender Vakuumisolation wird ein Schneidbrenner geschaffen, bei dem der Flüssigkeitsstrahl auch noch an der Werkstückauftrittstelle ausreichend kühl ist und der gegen Überhitzung und Schlackenspritzer geschützt ist.

Zwei Ausführungsbeispiele der Erfindung sind in der Zeichnung dargestellt und werden im nachfolgenden näher beschrieben.

Es zeigen
Fig. 1 einen Schneidbrenner mit innenliegender Schneiddüse
Fig. 2 einen Schneidbrenner mit außenliegender Schneiddüse.

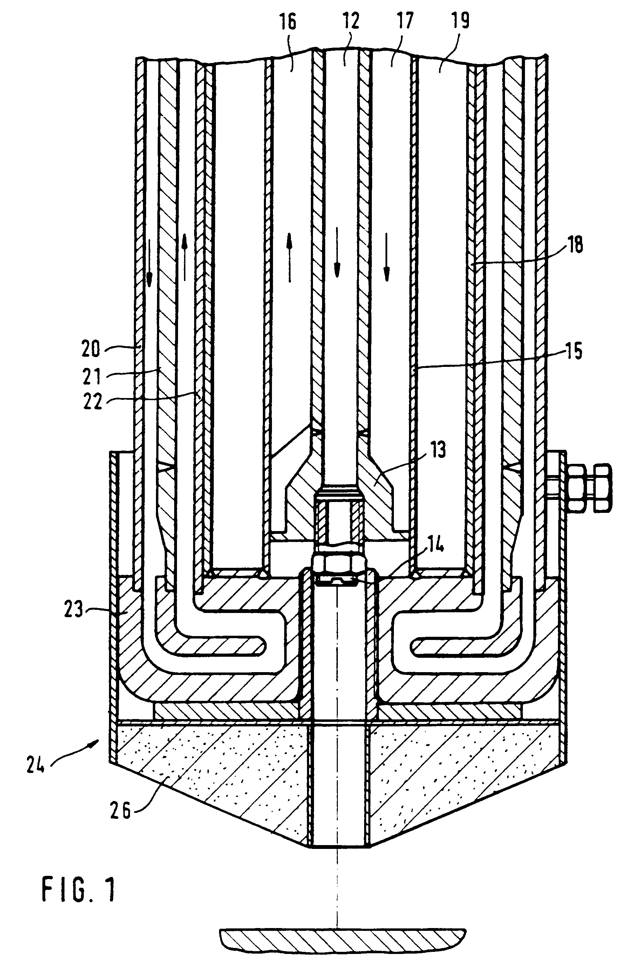

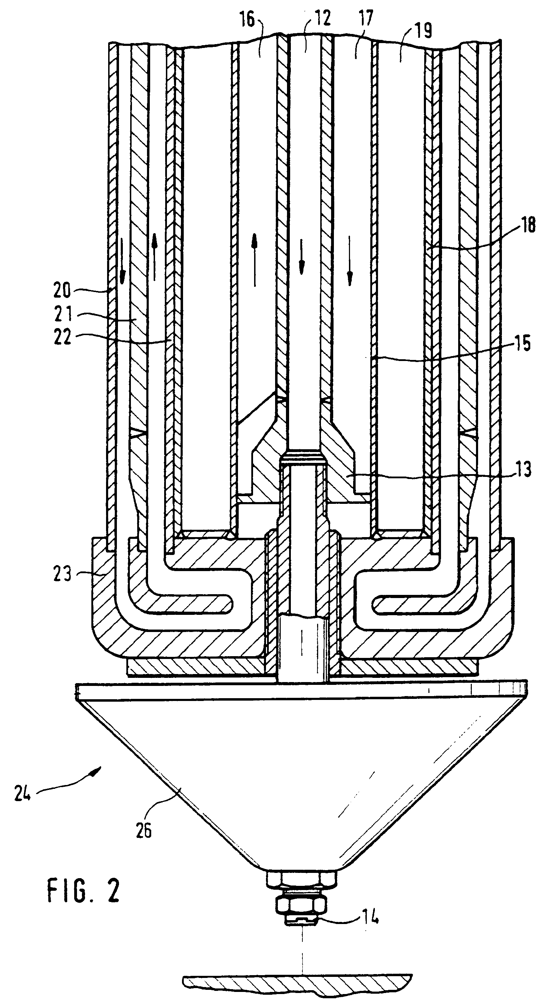

Die in den Fig. 1 und 2 veranschaulichten Flüssigstrahlschneidbrenner weisen eine mittig angeordnete Flüssigkeitshochdruckleitung 12 auf, an der ein Mundstück 13 zur Befestigung von verschiedenen Schneiddüsen 14 angeschweißt ist. Die Hochdruckleitung 12 und das Mundstück 13 sind konzentrisch von einem Rohr 15 umgeben, welches die Leitung für ein tiefsiedendes, verflüssigtes Kühlmittel, vorzugsweise flüssigen Stickstoff, bildet. Die Leitung 16 zur Zuleitung des Kühlmittels befindet sich in dem Ringspalt 17.

Das Rohr 15 ist von einem weiteren konzentrischen Rohr 18 umgeben, welche zur Aufnahme einer Vakuumisolation, vorzugsweise Vakuumsuperisolation, einen Raum 19 bilden, die die Hochdruckflüssigkeit auch gegen Wärmeeinstrahlung schützt.

Gegen Überhitzung und Schlackenspritzer ist ein Kühlwassermantel aus Edelstahlrohren 20, 21, 22, mit einem aus Kupfer gegossenem Kühlkopf 23, über das Rohr 18 geschoben. Der Kupferkühlkopf 23 hat die Aufgabe das breite Mundstück 13 zu umschließen und das Kühlwasser abzuführen.

Um Beschädigungen des Kupferkühlkopfes 23 durch zurückspritzende Schlacke zu vermeiden, ist der Kühlkopf 23 mit einer Schutzkappe 24 aus Edelstahl mit einer feuerfesten Masse 26 geschützt.

Beim Brenner 10 gemäß Fig. 1 ist die Schneiddüse 24 innerhalb des Brenners angeordnet.

Beim bevorzugten Brenner gemäß Fig. 2 ist die Schneiddüse 14 außerhalb angeordnet. Darüber hinaus weist bei diesem Brenner die feuerfeste Masse eine konische Form auf. Die freiliegende Schneiddüse 14 wird durch den austretenden Sauerstoff gegen zurückspritzende Schlacke geschützt. Die Kühlung der Düse 14 durch den flüssigen Sauerstoffschneidstrahl verstärkt die Schutzwirkung.

Die konische Form der Feuerfestausmauerung hat den Vorteil, daß sie weit aus weniger beansprucht wird, als die Ausführung gemäß Fig. 1, die schützende Wirkung für den Kupferkühlkopf aber trotzdem bestehen bleibt. Dadurch wird eine Konstruktion des Brennerkopfes erreicht, die eine außerordentlich gute Standfestigkeit aufweist

## Patentansprüche

1. Flüssigstrahlschneidbrenner mit einer mittig darin angeordneten Flüssigkeitsstrahlleitung (12) für Hochdruckflüssigsauerstoff, an deren Mundstück (13) eine Schneiddüse (14) befestigt ist,
gekennzeichnet durch
ein die Leitung (12) konzentrisch umgebendes Rohr (15) zur Zu- und Ableitung eines tiefsiedenden verflüssigten Kühlmittels, ein das Rohr (15) konzentrisch umgebendes weiteres Rohr (18), zwischen denen ein Raum (19) für eine Vakuumisolation vorgesehen ist sowie ein das weitere Rohr (18) konzentrisch umgebender Kühlwassermantel (20, 21, 22), wobei sich die Doppelkühlung wenigstens bis zur Schneiddüse (14) erstreckt.

2. Flüssigstrahlschneidbrenner nach Anspruch 1,
dadurch gekennzeichnet,
daß an demjenigen axialen Ende des Kühlwassermantels (20,21,22), das der Schneiddüse (14) zugeordnet ist, ein Bauteil in Form eines Kühlkopfes (23) befestigt ist, der radial erstreckende Leitungsabschnitte für das Kühlwasser beinhaltet.

3. Flüssigstrahlschneidbrenner nach Anspruch 2,
dadurch gekennzeichnet,
daß dem Kühlkopf (23) eine Schutzkappe (24) mit einer vorzugsweise konisch ausgebildeten feuerfesten Masse (26) zugeordnet ist.

4. Flüssigstrahlschneidbrenner nach Anspruch 3,
dadurch gekennzeichnet,
daß die Schneiddüse (14) außerhalb der Schutzkappe (24) mit der feuerfesten Masse (26) liegt.

## Claims

1. Liquid-jet cutting torch having, arranged centrally therein, a liquid jet line (12) for high pressure liquid oxygen, at the mouthpiece (13) of which a cutting nozzle (14) is fastened, characterised by a tube (15), concentrically surrounding the line (12), for supplying and removing a low-boiling liquefied coolant, a further tube (18), concentrically surrounding the tube (15) between which tubes there is provided a space (19) for a vacuum insulation, and a cooling-water jacket (20,21,22), concentrially surrounding the further tube (18), whereby the double cooling extends at least the cutting nozzle (14).

2. Liquid-jet cutting torch according to Claim 1, characterised in that on that axial end of the cooling-water jacket (20, 21, 22) to which the cutting nozzle (14) is assigned there is fastened a component in the form of a cooling head (23), which contains radially extending line sections for the cooling water.

3. Liquid-jet cutting torch according to Claim 2, characterised in that the cooling head (23) is assigned a protective cap (24) with a preferably conically designed refractory mass (26).

4. Liquid-jet cutting torch according to Claim 3, characterised in that the cutting nozzle (14) lies outside the protective cap (24) with the refractory mass (26).

## Revendications

1. Torche de découpage à jet liquide comportant une conduite pour le liquide du jet (12) placée en sont milieu, pour l'oxygène liquide à haute pression, avec une buse de découpage (14) fixée à l'embout (13), caractérisée par un tube (15) entourant de manière concentrique la conduite (12) pour l'alimentation et l'évacuation d'un fluide de refroidissement, liquide à basse température d'ébullition, un autre tube (18) entourant de manière concentrique le tube (15), et entre lesquels existe un volume (19) pour une isolation sous vide, ainsi qu'une chemise d'eau (20,21,22), entourant de manière concentrique l'autre tube (18), tandis que la réfrigération double s'étend au moins jusqu'à la buse de découpage (14).

2. Torche de découpage à jet liquide selon la revendication 1, caractérisée en qu'à l'extrémité axiale de la chemise d'eau de refroidissement (20, 21, 22) ou se trouve la buse de découpage (14), il est prévu une pièce en forme de tête de refroidissement (23) qui comporte un segment de conduite dirigé radialement pour l'eau de refroidissement.

3. Torche de découpage à jet liquide selon la revendication 2, caractérisée par un capuchon de protection (24) muni d'une masse réfractaire (26) de préférence de forme conique associée à la tête de refroidissement (23).

4. Torche de découpage à jet liquide selon la revendication 3, caractérisée en ce que la buse de découpage (14) se situe à l'extérieur du capuchon de protection (24) muni de la masse réfractaire (26).
